# EUROPÄISCHE PATENTANMELDUNG

(11) **EP 0 890 466 A2**
(43) Veröffentlichungstag der Anmeldung: **13.01.1999**
(21) Anmeldenummer: 98112076.9
(22) Anmeldetag: 30.06.1998
(51) Int. Cl.: B60J 7/10

(54) **Haltevorrichtung zum Lagern eines Hardtops**

(30) Priorität: 09.07.1997 DE 19729427
(71) Anmelder: Baecker, Manfred, 85221 Dachau-Pullhausen (DE)
(72) Erfinder: Baecker, Manfred, 85221 Dachau-Pullhausen (DE)
(74) Vertreter: Kinzebach, Werner, Dr.

(57) **Zusammenfassung**

Die Erfindung betrifft eine Haltevorrichtung (10) zum Lagern eines Hardtops. Die Haltevorrichtung umfaßt ein Gurtsystem (11), in welches das Hardtop so einsetzbar ist, daß die Gewichtskraft des Hardtops im wesentlichen vollständig von dem Gurtsystem (11) aufgenommen wird, wobei das Gurtsystem Mittel zum Fixieren des Hardtops in der Haltevorrichtung und Mittel zum Befestigen der Haltevorrichtung an einer Wand oder einer Decke eines Raumes aufweist. Eine Schutzhülle (21), in welche das Gurtsystem eingenäht ist, kann ebenfalls vorgesehen sein. Die erfindungsgemäße Haltevorrichtung ist sowohl für Hardtops mit Verankerungsstiften, als auch für Hardtops ohne Verankerungsstifte geeignet.

## Beschreibung

Die Erfindung betrifft eine Haltevorrichtung zum Lagern des Hardtops eines Cabriolets, eines Roadsters oder eines anderen Fahrzeugs mit abnehmbaren starren Aufbauten.

In den letzten Jahren haben Freizeitfahrzeuge wie Cabriolets oder Roadster in der Bevölkerung zunehmend an Beliebtheit gewonnen. Diese Fahrzeuge besitzen kein festes Verdeck, sondern weisen zum Schutz der Insassen bei schlechtem Wetter lediglich ein manuel oder automatisch ausklappbares Stoffverdeck auf. In der kalten Jahreszeit im Herbst und Winter machen sich jedoch die unzureichenden Wärmedämmungseigenschaften des Stoffverdecks bemerkbar, so daß derartige Fahrzeuge nur bedingt ganzjahrestauglich sind. Zudem sind die Stoffverdecke meist nur mit einer einfachen, unbeheizten Plastikheckscheibe versehen, die im Herbst und Winter nicht die notwendige freie Sicht nach hinten garantiert.

Die Hersteller von Cabriolets und Roadstern bieten daher für ihre Fahrzeuge sogenannte Hardtops an. Dabei handelt es sich um meist aus Kunststoff oder Leichtmetall bestehende Verdecke, die häufig eine beheizbare Heckscheibe aufweisen und innen mit einem Stoffhimmel ausgeschlagen sind. Ein solches Hardtop wird auf dem Fahrzeug befestigt und vermittelt im Winter die Abdichung und den Komfort einer Limousine. In der warmen Jahreszeit wird das Hardtop jedoch nicht benötigt und muß daher vom Benutzer in der Garage oder im Keller gelagert werden.

Üblicherweise ragen aus dem Hardtop wenigstens zwei Verankerungsstifte nach unten heraus, mit denen das Hardtop in der Karosserie des Cabriolets oder des Roadsters verankert wird. Es sind Haltevorrichtungen zum Lagern eines Hardtops bekannt, welche diese herausstehenden Verankerungsstifte zum Fixieren des Hardtops in der Haltevorrichtung nutzen. Da Hardtops relativ schwer sind, je nach Ausführungsform liegt das Gewicht meist in einem Bereich zwischen 25 und 45 kg, weisen die bekannten Haltevorrichtungen einen Metallrahmen auf, in welchem die beiden Verankerungsstifte des Hardtops befestigbar sind. Außerdem weist die Haltevorrichtung meist ein geeignetes Befestigungsmittel auf, mit dem die gesamte Anordnung aus Haltevorrichtung und darin fixiertem Hardtop an der Wand oder der Decke eines Raumes angebracht werden kann. In manchen Fällen ist eine separate Stoffhülle als Staubschutz vorgesehen, die über den Metallrahmen und das darin fixierte Hardtop gezogen werden kann. Das Hardtop kann daher mit Hilfe des Metallrahmens an die Wand oder Decke gehängt werden, oder wenn der Metallrahmen mit einem zusätzlichen Ständer versehen ist, auf den Boden stehend gelagert werden. Die Gesamtanordnung aus Metallrahmen und Hardtop wird dann aber häufig so schwer, daß einige Hersteller zusätzlich ein fahrbares Tischchen zum leichteren Transport des Hardtops anbieten.

Es sind auch Hardtops bekannt, die keine derartigen Verankerungsstifte aufweisen. Das Hardtop des britischen Roadsters MG-F rastet beispielsweise in eine Art Nut in der Fahrzeugkarosserie ein und wird über am Hartop befindliche Hebel befestigt. Auch die Lagerung dieses Hardtops erfolgt mitttels eines, meist fahrbaren Metallgestells, in welches das Harttop, gegebenenfalls mit einer Schutzhülle versehen, eingesetzt werden kann.

In dem deutschen Gebrauchsmuster DE 94 09 349 U1 ist eine Hebeeinrichtung für das Hardtop-Verdeck eines Kraftfahrzeuges beschrieben. Die Hebeeinrichtung weist Gurte auf, deren eines Ende mit einer motorbetriebenen Gurttrommel verbunden ist. Das freie Ende jedes Gurtes weist Haken auf, die zum Ansetzen an der hinteren bzw. vorderen Kante des Hardtops dienen.

Aus der deutschen Patentanmeldung DE 42 38 346 A1 ist eine Vorrichtung zum Verstauen des Hardtops eines Cabrios an einer Garagendecke bekannt geworden, die eine motorbetriebene Hebeeinrichtung nach Art der DE 94 09 349 U1 aufweist und zusätzlich einen an der Decke befestigbaren unten offenen Aufbewahrungskasten umfaßt.

Im dem deutschen Gebrauchsmuster DE 90 11 895 U1 ist eine Vorrichtung zum Befstigen eines Fahrrades an einer Wand beschrieben. Die Vorrichtung weist ein Band zur Stabilisierung des Fahrrades auf. Das Band hat einen Haltering, der mit einem in der Wand befestigten Haken verbunden werden kann. Die Gewichtskraft des Fahrrades lastet auf einer mit der Wand verbundenen Schiene. Diese Vorrichtung ist für die Lagerung von Hardtops nicht geeignet.

Die bekannten Haltevorrichtungen für Hardtops weisen zahlreiche Nachteile auf. Sie sind insgesamt sehr schwer und die Montage des Hardtops in dem Rahmen und das Anbringen des Rahmens an der Wand oder der Decke eines Raumes ist häufig sehr kompliziert. Zudem sind derartige Konstruktionen sehr teuer und kosten im Endverkauf meist etwa 10 bis 20 % des Preises des Hardtops selbst. Derartige Konstruktionen werden daher meist nicht direkt zusammen mit dem Hardtop verkauft sondern als separate Zusatzausstattung angeboten.

Aufgabe der vorliegenden Erfindung ist es daher, eine Haltevorrichtung zum Lagern eines Hardtops anzugeben, die leicht gewichtig, einfach benutzbar und insbesondere billig in der Herstellung ist. Der Preis der Haltevorrichtung sollte lediglich einen geringen Teil des Preises des Hardtops selbst ausmachen, so daß das Hardtop regelmäßig mit der zugehörigen Haltevorrichtung verkauft werden kann.

Diese Aufgabe wird erfindungsgemäß gelöst durch eine Haltevorrichtung zum Lagern eines Hardtops, die ein Gurtsystem umfaßt, in welches das Hardtop so einsetzbar ist, daß die Gewichtskraft des Hardtops im wesentlichen vollständig von dem Gurtsystem aufgenommen wird, wobei das Gurtsystem Mittel zum Fixieren des Hardtops in der Haltevorrichtung und Mittel zum Befestigen der Haltevorrichtung an einer Wand oder einer Decke eines Raumes aufweist. Die Gewichtskraft des Hardtops wird in der erfindungsgemäßen Vorrichtung ausschließlich innerhalb des Gurtsystems von den darin integrierten Fixierungsmitteln auf die ebenfalls in dem Gurt integrierten Befestigungsmittel übertragen.

Das Gurtsystem kann dabei aus einem beliebigen reißfesten Material bestehen, beispielsweise aus Leder, Kunstleder oder einem reißfesten Kunststoff- und/oder Naturfasergewebe.

Erfindungsgemäß verläuft das Gurtsystem so, daß beim Aufhängen der Haltevorrichtung die Gewichtskraft des Hardtops im wesentlichen auf den Gurten lastet. Da ein Gurtsystem aus den obengenannten Materialien bei hoher Zugfestigket ein geringes Eigengewicht besitzt, ist die erfindungsgemäße Haltevorrichtung sehr leicht und ihre Herstellungskosten sind gering. Ein starrer, schwerer Metallrahmen wie bei bekannten Konstruktionen ist bei der erfindungsgemäßen Vorrichtung nicht notwendig. Ein derartiges Tragegurtsystem ist als Haltevorrichtung sowohl für Hardtops mit, als auch ohne Verankerungsstifte geeignet.

Eine erste vorteilhafte Ausführungsform der erfindungsgemäßen Haltevorrichtung ist speziell für Hardtops ohne Verankerungsstifte geeignet. Dabei weisen die Fixierungsmittel des Gurtsystems Gurtabschnitte auf, die mittels lösbar ausgebildeter Verschlussmittel auftrennbar sind. Die Verschlußmittel können beispielsweise als Klettverschlüsse oder Druckknöpfe ausgebildet sein.

Gemäß einer weiteren vorteilhaften Ausführungsform der erfindungsgemäßen Haltevorrichtung, speziell für Hardtops mit Verankerungsstiften, weisen die Fixierungsmittel des Gurtsystems mindestens zwei Verankerungsösen zur Aufnahme der Verankerungsstifte des Hardtops auf. Die erfindungsgemäße Haltevorrichtung besteht daher im wesentlichen aus zwei Ösen, welche die Gewichtskraft des Hardtops aufnehmen und über ein Gurtsystem an die Befestigungsmittel weiterleiten, mit denen die gesamte Anordnung an einer Wand oder einer Decke befestigt ist.

In einer Ausführungsform weisen die Befestigungsmittel mindestens eine Halteöse auf, die in einem mittleren Bereich eines ersten, querverlaufenden Gurtabschnitts angeordnet ist. Im Fall einer Haltevorrichtung für ein Hardtop mit Verankerungsstiften, wäre dies der die beiden Verankerungsösen verbindende Gurtabschnitt. "Querverlaufend" bezieht sich dabei auf die Fahrzeug- bzw. Hardtoplängsachse. Mit einer derartigen Halteöse läßt sich die Haltevorrichtung und das darin verankerte Hardtop beispielsweise an einem an der Decke befestigten Haken aufhängen. Wenn der Schwerpunkt des Hardtops in der Mitte zwischen den beiden Verankerungsstiften liegt, ist das Hardtop bei einer derartigen Befestigungsweise bereits austariert und hängt horizontal unter seinem Befestigungspunkt. Andernfalls kippt das Hardtop um eine durch die beiden Verankerungsstifte laufende Achse und kommt entweder mit dem Front- oder dem Heckbereich an der Decke in Anlage.

Besonders vorteilhaft weisen die Befestigungsmittel jedoch - entweder zusätzlich oder alternativ zu der vorgenannten mittleren Halteöse - zwei Halteösen auf, die an den beiden seitlichen Enden des ersten, querverlaufenden Gurtabschnitts angeordnet sind. Die seitlichen Halteösen ragen dabei über den Umriß des Hardtops hinaus und sind daher leichter zugänglich als die mittlere Halteöse. Bei dieser erfindungsgemäßen Ausführungsform der Haltevorrichtung ist das Aufhängen des Hardtops an einer Wand oder Decke besonders einfach.

Die Befestigungsmittel können außerdem mindestens eine zweite Halteöse aufweisen, die in dem, wieder auf die Hardtoplängsachse bezogenen, in Fahrtrichtung vorderen Verbindungsbereich eines zweiten, längsverlaufenden Gurtabschnitt mit einem dritten, längsverlaufenden Gurtabschnitt angeordent ist. Im Fall einer Haltevorrichtung mit Ösen für Verankerungsstifte, ist diese vordere Halteöse über den zweiten Gurtabschnitt mit der ersten Verankerungsöse und über den dritten Gurtabschnitt mit der zweiten Verankerungsöse verbunden. Dabei bilden die Ösen im wesentlichen die Eckpunkte eines gleichschenkligen Dreiecks mit der Halteöse als Spitze. Diese zweite Halteöse eignet sich insbesondere zum Aufhängen des Hardtops an einem Wandhaken.

Bei beiden Befestigungsarten wird die gesamte Gewichtskraft des Hardtops von dem Gurtsystem aufgenommen. Im Fall der Wandhalterung durch die zweite Halteöse sollten jedoch Sicherungsmittel vorgesehen sein, die ein Kippen des Hardtops um die durch die beiden Verbindungsstifte gehende Achse verhindern, wobei diese Sicherungsmittel jedoch praktisch keine Kraft aufnehmen müssen. Ein derartiges Sicherungsmittel kann beispielsweise eine leichte Staubschutzhülle sein, in die das Gurtsystem eingenäht ist.

Gemäß einer ersten Alternative werden die Halteösen durch Schlaufen des Gurtsystems gebildet. Nach einer zweiten Alternative sind die Verankerungs- und Halteösen Metallringe. Anstelle der Metallringe können jedoch auch Ringe aus anderen Materialien verwendet werden, die geeignet sind, Kräfte von einigen 10 kg aufzunehmen.

Die Fixierungsmittel weisen für jede Verankerungsöse vorteilhaft ein Verschlußelement auf, in welchem der durch die Verankerungsöse gesteckte Verankerungsstift lösbar befestigt ist. Bevorzugt weist das Verschlußelement ein Verriegelungssystem auf, das den Verriegelungssystemen in den Ausnehmungen der Karosserie des Fahrzeugs entspricht, in welchen das Hardtop bei Benutzung verankert wird. Damit gewährleistet ist, daß die Verankerungsstifte nicht mehr aus der Verankerungsöse herausgleiten können, muß der Durchmesser des Verschlußelementes selbstverständlich größer als der lichte Innendurchmesser der jeweiligen Verankerungsöse sein. Das Verschlußelement kann beispielsweise als Verschlußplatte oder Verschlußhülse ausgebildet sein. Vorteilhaft ist das Verschlußelement beispielsweise über eine Schnur mit seiner zugehörigen Verankerungsöse verbunden, so daß die Verschlußplatte vor Verlust geschützt ist.

Bei einer besonders bevorzugten Ausführungsform umfaßt die Haltevorrichtung außerdem eine verschließbare Schutzhülle, deren Zuschnitt vorteilhaft der Form des Hardtops angepaßt ist.

An das Material der Schutzhülle werden keine besonderen Anforderungen gestellt, da die Gewichtskraft des Hardtops im wesentlichen vollständig von dem Gurtsystem aufgenommen wird und die Hülle, je nach Lagerungsart, allenfalls durch ein Kippmoment des Hardtops belastet ist. Vorteilhaft wird jedoch ein besonders leichtes Material für die Schutzhülle gewählt, z.B. ein Kunststoffgewebe. Die Hülle dient hauptsächlich als Staubschutz und kann in Bereichen, die mit der Decke, der Wand oder dem Boden in Anlage kommen können, zusätzlich verstärkt sein. Besonders vorteilhaft weist das Schutzhüllenmaterial eine gewisse Elastizität auf, beispielsweise eine Querelastizität, so daß sich die Hülle optimal der Form des Hardtops anpassen kann.

Das Gurtsystem kann in die Schutzhülle eingenäht, eingeschweißt oder eingeklebt sein. Da aber die Gewichtskräfte des Hardtops praktisch ausschließlich innerhalb des Gurtsystems wirken, treten an den Verbindungsnähten zwischen dem Gurtsystem und der Schutzhülle keine großen Kräfte auf. Vorteilhaft ist das Gurtsystem zumindestens im Bereich der Verankerungsösen in die Schutzhülle eingelassen. Bevorzugt weist die Schutzhülle in diesen Bereichen ebenfalls Verstärkungen auf. Schutzhülle und Gurtsystem können aber auch zweiteilig vorgesehen sein, d.h. das Gurtsystem ist abnehmbar über geeignete Befestigungsmittel mit der Schutzhülle verbunden.

Um die erfindungsgemäße Haltevorrichtung möglichst einfach an Haken in der Wand oder in der Decke befestigen zu können, ist vorteilhaft vorgesehen, daß das Gurtsystem im Bereich der Befestigungsmittel nicht mit der Schutzhülle verbunden ist sondern außerhalb der Schutzhülle verläuft.

Bevorzugt ist die Schutzhülle mit einem Reißverschluß verschließbar, der auf wenigstens einem Teil des Umfangsbereichs der Hülle verläuft. Besonders bevorzugt befindet sich der Reißverschluß in dem Bereich der Schutzhülle, die dem Heckbereich des Hardtops entspricht. Anstelle eines Reißverschlusses können selbstverständlich auch andere Verschlußmittel, beispielsweise Druckknöpfe oder Klettverschlüsse vorgesehen sein.

Bei einer bevorzugten Ausführungsform der erfindungsgemäßen Haltevorrichtung, insbesondere für Hardtops ohne Verankerungsstifte, sind die in Längsrichtung verlaufenden zweiten und dritten Gurtabschnitte als geschlossen umlaufende Gurte ausgebildet. Im Bereich des Reißverschlusses der Hülle sind diese Gurtabschnitte zum problemlosen Öffnen der Hülle auftrennbar. Das Hardtop kann dann einfach in die Hülle eingesetzt oder aus ihr entnommen werden. Da der Verbindungsbereich der auftrennbaren Gurte einen Teil des Gurtsystems darstellt, der die Gweichtskarft des Hartops überträgt, muß dieser lösbare Verbindungsbereich ebenfalls reißfest ausgebildet sein. Gemäß einer besonders einfachen Alternative, wird die Auftrennbarkeit der Gurtabschnitte durch Klettverschlüsse mit ausreichender Reißfestigkeit gewährleistet. Die lösbare Verbindung der Gurtsegmente kann aber auch mittels Drucknöpfen, Reißverschlüssen oder durch einfaches Verknoten der Gurtsegmente erfolgen.

Bei einer bevorzugten Ausführungsform der Erfindung hat das Gurtsystem die Form eines Bandes, es können jedoch auch andere Strukturen, beispielsweise seilartige Strukturen vorgesehen sein.

Die vorliegende Erfindung wird im folgenden anhand von in den beigefügten Zeichnungen dargestellten Ausführungsbeispielen ausführlicher beschrieben.

In der Zeichnung zeigt:
- Figur 1: die schematische Darstellung eines Hardtops in der Seitenansicht;
- Figur 2: die Seitenansicht einer ersten Ausführungsform einer erfindungsgemäßen Haltevorrichtung für ein Hardtop ohne Verankerungsstifte;
- Figur 3: die Unteransicht einer zweiten Ausführungsform einer erfindungsgemäßen Haltevorrichtung für ein Hardtop mit Verankerungsstiften;
- Figur 4: die perspektivische Teilansicht einer Verankerungsöse einer Variante der Haltevorrichtung der Fig. 3;
- Figur 5: eine an der Decke befestigte Haltevorrichtung nach Fig. 3;
- Figur 6: eine an der Wand befestigte Haltevorrichtung nach Fig. 3;
- Figur 7: das Aufsetzen einer Verschlußhülse auf einen Verankerungsstift eines Hardtops im Detailauschnitt; und
- Figur 8: die Anordnung gemäß Figur 7 beim Verriegeln des Verankerungsstiftes.

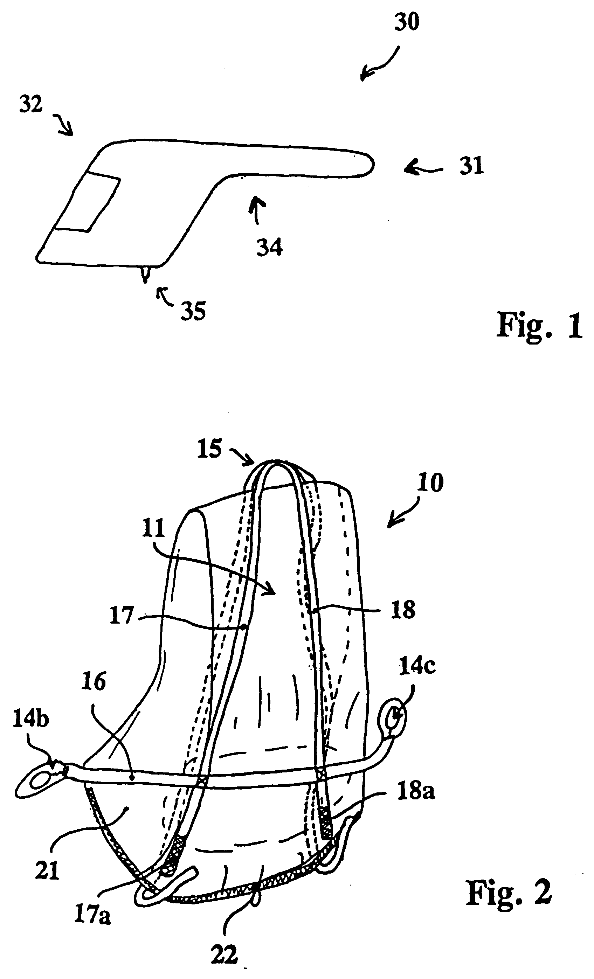

In Figur 1 erkennt man ein Hardtop 30, mit einem Frontbereich 31, einem Heckbereich 32 und einem seitlichen Ausschnitt 34, der dem Profil des Seitenfensters entspricht. Im unteren Bereich des Hardtops ist in der Nähe des Übergangs vom Heck zum Frontbereich einer der beiden Verankerungsstifte, mit denen das Hardtop in der Karosserie des Fahrzeuges verankert wird, mit der Bezugsziffer 35 bezeichnet. Derartige Verankerungsstifte fehlen jedoch bei einigen auf dem Markt befindlichen Hardtops.

Figur 2 zeigt eine erste Ausführungsform der erfindungsgemäßen Haltevorrichtung 10. Diese erste Variante ist insbesondere für Hardtops ohne Verankerungsstifte geeignet. Die Haltevorrichtung besteht im wesentlichen aus einem Gurtsystem 11, das im dargestellten Beispiel drei Gurtabschnitte 16, 17 und 18 umfaßt. Der querverlaufende erste Gurtabschnitt 16 weist an seinen Enden seitliche Halteösen 14b und 14c auf, an denen das Hardtop mit Haken an der Wand oder der Decke eines Raumes aufgehängt werden kann. Im Fall einer Befestigung an der Decke kann die Haltevorrichtung zusätzlich an einem dritten Haken mit Hilfe einer vorderen Halteöse 15 befestigt werden, die beispielsweise als Schlaufe zweier längsverlaufenden Gurtabschnitte 17, 18 ausgebildet sein kann. Die längsverlaufenden Gurtabschnitte 17, 18 können an ihren Kreuzungspunkten mit dem querverlaufenden Gurtabschnitt 16 mit diesem verbunden sein, beispielsweise vernäht, verschschweißt oder verklebt. Die längsverlaufenden Gurtabschnitte 17, 18 umgreifen das in einer Schutzhülle 21 befindliche Hardtop entlang einer geschlossenen Umfangslinie (in Figur 2 sind die nicht sichtbaren, auf der Rückseite der Haltevorrichtung 10 befindlichen Bereiche der Gurte 17, 18 gestrichelt dargestellt). Die Schutzhülle 21 weist im hinteren Bereich einen Reißverschluß 22 auf. In diesem Bereich sind die längsverlaufenden Gurtabschnitte 17, 18 mittels Klettverschlüssen 17a, 18a auftrennbar ausgebildet, so daß das Hardtop in die Hülle eingesetzt oder aus ihr entnommen werden kann.

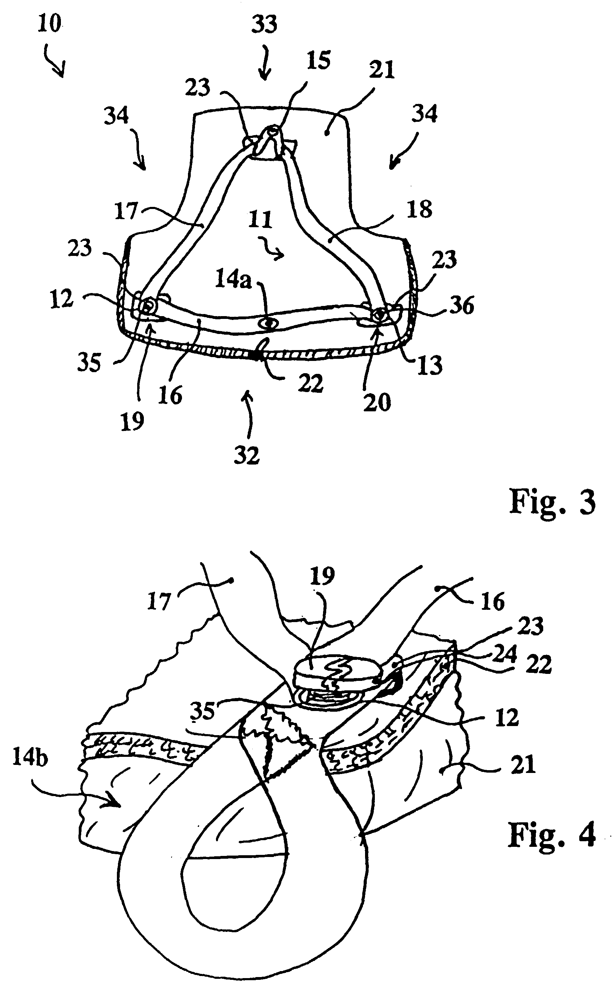

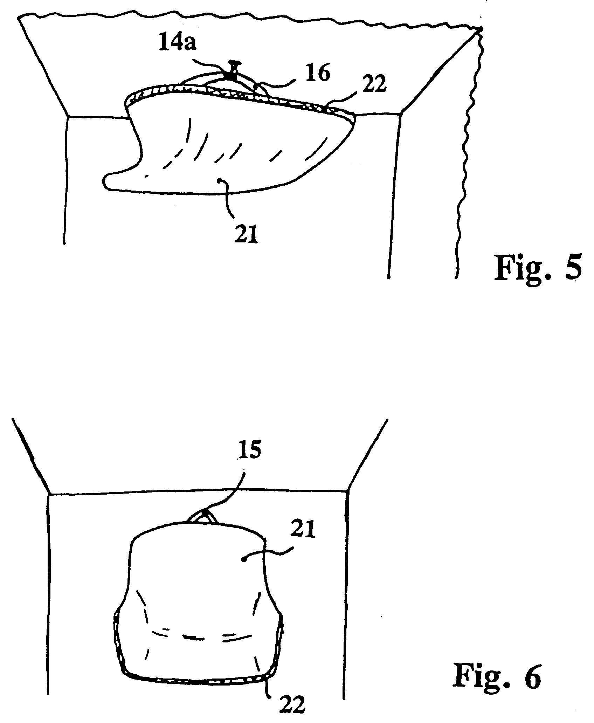

Figur 3 zeigt eine zweite Ausführungsfom der erfindungsgemäßen Haltevorrichtung 10. Diese Variante eignet sich besonders für Hardtops mit Verankerungsstiften. Das Gurtsystem der Haltevorrichtung umfaßt, wie bei der ersten Variante, drei Gurtabschnitte 16, 17 und 18. Der erste Gurtabschnitt 16 verläuft zwischen der ersten Verankerungsöse 12 und der zweiten Verankerungsöse 13, die zur Aufnahme der beiden Verankerungsstifte 35, 36 des Hardtops dienen. Figur 3 ist eine Unteransicht dieser zweiten Ausführungsform der erfindungsgemäßen Haltevorrichtung, so daß die Verankerungsstifte 35, 36 von unten aus der Zeichenebene nach oben treten, wenn sich ein Hardtop 30 in der Haltevorrichtung 10 befindet. Die Verankerungsstifte werden dann mit auf der Unterseite der Haltevorrichtung angebrachten Verankerungsplatten 19, 20 fixiert (vgl. insbesondere Detaildarstellung in Figur 4). Bei der Variante der Figur 3 ist etwa in der Mitte des Gurtabschnittes 16 zwischen der ersten und der zweiten Verankerungsöse im Gurt eine erste, mittlere Halteöse 14a vorgesehen, die zur Befestigung der Haltevorrichtung an der Decke dient (vgl. Figur 5). Der zweite Gurtabschnitt 17 und der dritte Gurtabschnitt 18 verlaufen von der ersten Verankerungsöse 12 bzw. zweiten Verankerungsöse 13 zu einer zweiten Halteöse 15, die zur Befestigung der Haltevorrichtung 10 an einer Wand dient (vgl. Figur 6). Das Gurtsystem 11 nimmt bei Befestigung der Haltevorrichtung 10 an Decke oder Wand die gesamte Gewichtskraft des Hardtops 30 auf. Im dargestellten Beispiel weist die Haltevorrichtung zusätzlich eine Schutzhülle 21 auf, die im Heckbereich durch einen Reißverschluß 22 verschließbar ist. Die Schutzhülle 21 besteht aus einem leichten Gewebe, das lediglich als Staubschutz dient. Im Bereich der ersten und zweiten Verankerungsöse 12, 13 weist das Gewebe eine zusätzliche Verstärkung 23 auf, in die die Verankerungsösen eingelassen sind. Eine ähnliche Verstärkung befindet sich im Bereich der zweiten Halteöse 15, wobei der zweite Gurtabschnitt 17 und der dritte Gurtabschnitt 18 im Bereich dieser Verstärkung 23 zusammenlaufen. Der Gurt bildet in diesem Bereich eine kleine Brücke, in deren Mitte sich die zweite Halteöse befindet. Das Gurtsystem ist lediglich im Bereich der drei Verstärkungen 23 mit der Schutzhülle 21 verbunden. Die Verbindung des Gurtsystems mit der Schutzhülle im Bereich der zweiten Halteöse 15 hat den zusätzlichen Zweck, beim Aufhängen der Haltevorrichtung in dieser Halteöse (Figur 6) zu verhindern, daß die Hülle mit dem Hardtop nach hinten wegkippt. Die dabei vom Verbindungsbereich zwischen der Verstärkung 23 und der Schutzhülle 21 aufzunehmenden Kräfte sind jedoch sehr gering. Die Schutzhülle ist im Frontbereich gemäß dem Frontscheibenprofil 33 ausgeschnitten. Sie weist ebenfalls die seitlichen Ausschnitte 34 der Seitenfensterprofile auf.

Es versteht sich, daß die Haltervorrichtung der Figur 3 alternativ oder zusätzlich zu der mittleren Halteöse 14a, seitliche Halteösen 14b und 14c entsprechend der Ausführungsform der Figur 2 aufweisen kann. In Figur 4 ist eine Detailansicht einer derartigen Variante der Haltevorrichtung der Figur 3 dargestellt. Man erkennt insbesondere, daß der querverlaufende Gurtabschnitt 16 durch eine seitliche Halteöse 14b verlängert ist, die über den Rand der Hardtophülle 21 hinausragt und daher für den Benutzer leichter zugänglich ist, als die mittlere Halteöse 14a.

Wenn der Benutzer das Hardtop lagern will, öffnet er den Reißverschluß 22 und schiebt das Hardtop mit dem Frontbereich 31 voran von hinten in die Hülle 21. Zuletzt werden die Verankerungsösen 12, 13 über die entsprechenden Verankerungsstifte 35, 36 des Hardtops gezogen und der Reißverschluß 22 wieder geschlossen. Die Hülle 21 liegt dann straff am Hardtop an. Um zu verhindern, daß die Verankerungsstifte 35, 36 aus den zugehörigen Verankerungsösen wieder herausrutschen können, werden diese Stifte mit Hilfe von Verschlußplatten 19, 20 fixiert. Die Verschlußplatten 19, 20 haben einen Verriegelungsmechanismus, der im wesentlichen dem Verriegelungsmechanismus für die Verankerungsstifte 35, 36 in der Karosserie des Cabrios oder des Roadsters entspricht. Ihr Durchmesser ist so groß, daß sie nicht durch die Öffnung der Verankerungsösen 12, 13 hindurchrutschen können. Über Sicherungsschnüre 24 sind die Platten 19, 20 an dem jeweiligen Verstärkungsbereich 23 der Schutzhülse 21 befestigt.

Je nach Wunsch kann der Benutzer die erfindungsgemäße Haltevorrichtung an der Decke oder der Wand eines Kellers oder einer Garage lagern. Bei der in Figur 5 dargestellten Lagerung an der Decke werden vorteilhaft die mittlere Halteöse 14a, bzw. die seitlichen Halteösen 14b, 14c verwendet, die in einen Haken an der Decke eingehakt werden. Bei Lagerung an der Wand wird vorteilhaft die Öse 15 verwendet. Das Hardtop kann dabei, wie in Figur 6 dargestellt, mit der Front nach oben aufgehängt werden. Besonders vorteilhaft wird das Hardtop jedoch mit der Front nach unten an der Wand befestigt. Dann kann der Frontbereich des Hardtops gegen die Wand kippen und dort in Anlage kommen, so daß im unteren Bereich des Lagerraumes, insbesondere in Bodennähe, wenig Platz von dem Hardtop beansprucht wird.

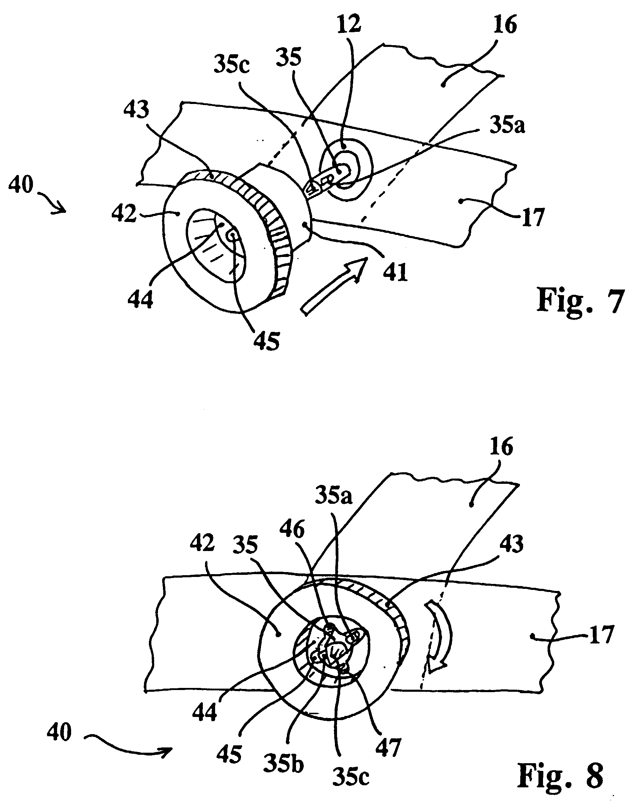

Die Figuren 7 und 8 zeigen eine Verschlußhülse 40, die eine Variante der in Figur 4 dargestellten Verschlußplatte 19 ist. Die Verschlußhülse 40 besitzt einen länglichen, im wesentlichen hohlen Mantel 41, der an einem Ende von einem radial überstehenden Kranz 42 begrenzt ist. Am Außenrand des Kranzes 42 können Rillen 43 oder Noppen vorgesehen sein, welche die Griffigkeit der Hülse 40 verbessern. Am anderen Ende weist die Hülse einen Boden 44 auf, in welchem eine längliche Öffnung 45 ausgespart ist. Im wesentlichen senkrecht zur Hauptachse der länglichen Öffnung 45 sind zwei Vertiefungen oder Mulden 46, 47 im Boden 44 vorgesehen.

Zur Verriegelung der Verankerungsstifte 35, 36 des Hardtops in der erfindungsgemäßen Haltevorrichtung geht der Benutzer wie folgt vor: Zunächst zieht er die Schutzhülle 21 mit dem integrierten Gurtsystem 11 über das Hardtop und führt dabei die Verankerungsstifte 35, 36 in die zugeordneten Verankerungsösen 12 bzw. 13 ein. In Figur 7 ist dieser Zustand für den Verankerungsstift 35 im Detailauschnitt dargestellt. Der Stift 35 ist bereits in die Verankerungsöse 12 der Gurtabschnitte 16, 17 eingesetzt. Bei der gezeigten Ausführungsform weist der Verankerungsstift 35 zwei radial nach außen vorspringende, sich diametral gegenüberliegenden Nasen 35a, 35b auf. Der Benutzer setzt nun die Verschlußhülse 40 so auf den Stift 35 auf (Pfeilrichtung in Figur 7), daß der Stift 35 mit seinen radialen Nasen 35a, 35b durch die im Boden 44 der Hülse 40 ausgesparte längliche Öffnung 45 geführt werden kann. Dann dreht der Benutzer die Hülse 45 so lange, bis die Nasen 35a, 35b in den Mulden 46, 47 im Boden 44 der Hülse 40 einrasten (Pfeilrichtung in Figur 8). Das Hardtop ist dann sicher in der Haltevorrichtung fixiert, denn der Verankerungsstift 35 kann nicht mehr unbeabsichtigt aus der Öse der Haltevorrichtung herausrutschen.

Die Länge der Hülse 40 ist so bemessen, daß die Spitze 35c des Verankerungsstiftes 35 in dem in Figur 8 dargestellten verriegelten Zustand nicht über den Kranz 42 hinausragt. Damit ist insbesondere bei einer Lagerung des Hardtops an der Wand (wie etwa in Figur 6 dargestellt) sowohl die Spitze 35c des Verankerungsstiftes als auch die Wand selbst vor Beschädigung geschützt, weil nur noch die Hülse 40 gegen die Wand in Anlage kommt.

Es versteht sich, daß die erfindungsgemäße Haltevorrichtung auch für andere Aufbauten von Fahrzeugen verwendet werden kann, beispielsweise für abnehmbare starre Abdeckungen von sogenannten Pick-Up's.

## Patentansprüche

1. Haltevorrichtung zum Lagern eines Hardtops, die ein Gurtsystem (11) umfaßt, in welches das Hardtop (30) so einsetzbar ist, daß die Gewichtskraft des Hardtops (30) im wesentlichen vollständig von dem Gurtsystem (11) aufgenommen wird, wobei das Gurtsystem Mittel zum Fixieren des Hardtops in der Haltevorrichtung und Mittel zum Befestigen der Haltevorrichtung an einer Wand oder einer Decke eines Raumes aufweist.

2. Haltevorrichtung nach Anspruch 1, dadurch gekennzeichnet, daß die Fixierungsmittel des Gurtsystems (11) Gurtabschnitte (17, 18) umfassen, die mittels lösbar ausgebildeter Verschlussmittel auftrennbar sind, oder daß die Fixierungsmittel des Gurtsystems (11) mindestens zwei Verankerungsösen (12, 13) zur Aufnahme von Verankerungsstiften (35, 36) des Hardtops (30) aufweisen.

3. Haltevorrichtung nach einem der Ansprüche 1 oder 2, dadurch gekennzeichnet, daß die Befestigungsmittel mindestens eine Halteöse (14a) aufweisen, die in einem mittleren Bereich eines ersten, querverlaufenden Gurtabschnitts (16) angeordnet ist, und/oder zwei Halteösen (14b,14c) aufweisen, die an den beiden Enden eines ersten, querverlaufenden Gurtabschnitts (16) angeordnet sind.

4. Haltevorrichtung nach einem der Ansprüche 1 bis 3, dadurch gekennzeichnet, daß die Befestigungsmittel eine Halteöse (15) aufweisen, die in dem vorderen Verbindungsbereich eines zweiten, längsverlaufenden Gurtabschnitt (17) mit einem dritten, längsverlaufenden Gurtabschnitt (18) angeordent ist.

5. Haltevorrichtung nach einem der Ansprüche 3 oder 4, dadurch gekennzeichnet, daß die Halteösen (14a,14b,14c,15) durch Schlaufen des Gurtsystems gebildet sind.

6. Haltevorrichtung nach einem der Ansprüche 2 bis 5, dadurch gekennzeichnet, daß die Verankerungsösen (12,13) und/oder Halteösen (14a,14b,14c,15) Metall- oder Kunststoffringe sind.

7. Haltevorrichtung nach Anspruch 6, dadurch gekennzeichnet, daß die Fixierungsmittel für jede Verankerungsöse (12,13) ein Verschlußelement (19,20,40) aufweisen, in welcher der durch die Verankerungsöse (12,13) gesteckte Verankerungsstift (35,36) lösbar befestigbar ist, wobei der Durchmesser des Verschlußelements (19,20,40) größer ist als der lichte Innendurchmesser der Verankerungsöse (12,13).

8. Haltevorrichtung nach einem der Ansprüche 1 bis 7, dadurch gekennzeichnet, daß die Vorrichtung außerdem eine verschließbare Schutzhülle (21) umfaßt, deren Zuschnitt der Form des Hardtops (30) angepaßt ist.

9. Haltevorrichtung nach Anspruch 8, dadurch gekennzeichnet, daß das Gurtsystem (11) zumindest im Bereich der Verankerungsösen (12,13) in die Schutzhülle (21) eingelassen ist.

10. Haltevorrichtung nach Anspruch 9, dadurch gekennzeichnet, daß das Gurtsystem (11) im Bereich der Befestigungsmittel (14a,14b,14c,15) außerhalb der Schutzhülle (21) verläuft.

11. Haltevorrichtung nach einem der Ansprüche 8 bis 10, dadurch gekennzeichnet, daß die Schutzhülle (21) mit einem Reißverschluß (22) verschließbar ist, der auf wenigstens einem Teil des Umfangsbereichs der Hülle (21) verläuft.
